# EUROPÄISCHE PATENTSCHRIFT

(11) **EP 0 606 119 B1**
(45) Veröffentlichungstag und Bekanntmachung des Hinweises auf die Patenterteilung: **31.03.1999**
(21) Anmeldenummer: 94104434.9
(22) Anmeldetag: 08.05.1991
(51) Int. Cl.: C05F 17/00

(54) **Verfahren zur Kompostierung von Abfällen**
Process for composting waste
Procédé de compostage de déchets

(30) Priorität: 09.05.1990 DE 4014895; 09.07.1990 DE 4021865; 09.07.1990 DE 4021868; 09.07.1990 DE 4021867
(43) Veröffentlichungstag der Anmeldung: 13.07.1994
(62) Teilanmeldung aus: 91107549.7
(73) Patentinhaber: HERHOF UMWELTTECHNIK GmbH, D-35606 Solms-Niederbiel (DE)
(72) Erfinder: Schnorr, Karl-Ernst, D-35633 Lahnau-Atzbach (DE); Mutz, Bernd, D-35606 Solms-Niederbiel (DE); Hofmann, Hermann, D-35606 Solms-Niederbiel (DE)
(74) Vertreter: Zinnecker, Armin, Dipl.-Ing.

(56) Entgegenhaltungen:
- EP-A- 0 040 147
- DE-C- 3 800 201
- FR-A- 1 089 795

## Beschreibung

Die Erfindung betrifft ein Verfahren zur Kompostierung von Abfällen, bei dem das Rottegut in einen Behälter eingebracht wird und unter Luftzuführung mikrobiell abgebaut wird.

Ein Verfahren dieser Art ist aus der DE-PS 36 37 393 bekannt. Bei diesem Verfahren sind die nach dem "Anfahren" durchzuführenden Verfahrensschritte des Verfahrens verbesserungsfähig.

Aus der DE-OS 32 04 471 ist ein Verfahren der eingangs angegebenen Art bekannt, bei dem die aus dem Rottegut austretende Abluft dem Rottegut erneut zugeführt wird.

Die DE-OS 38 30 177 offenbart ein Kompostierungsverfahren für organische, in Mieten gelagerte Abfallstoffe, bei dem die aus einer Miete abgesaugte Luft den restlichen Mieten unter Druck zugeführt wird.

Aus der DE-OS 36 07 920 ist ein Verfahren zum Kompostieren von organischen Abfällen in zwei aufeinanderfolgenden Verfahrensstufen bekannt, bei denen die erste anaerob und die zweite aerob arbeitet. Das Ziel dieses Verfahrens besteht in einer Wärmeübertragung durch Materialmischung und in einer externen Wärmenutzung. Weiterhin soll der Sauerstoffverbrauch ausgeglichen werden.

Die DE-OS 34 20 732 offenbart ein Kompostierungsverfahren, bei dem die überschüssige Wärmemenge einer Heißverrottungs- und Wärmegewinnungsanlage auf einfache Weise dadurch abgeführt werden kann, daß die Umwälzluft über Leitungen einer Wärmetauscheranlage zugeführt wird, in der ihr die überschüssige Wärme entzogen und anderer Verwendung zugeführt wird. Die Verfahrensziele bestehen in einer Energieeinsparung, in einer Animpfung und in einer Frischluftvorerwärmung zur Abbaubeschleunigung.

Aus der DE-OS 29 44 519 ist ein Kompostierungsverfahren bekannt, bei dem eine Geruchsminimierung und eine Rottebeschleunigung durch Wasserzugabe erreicht werden sollen.

Aus der DE-OS 28 10 911 ist ein Verfahren zum Behandeln von kompostierfähigen Stoffen bekannt, bei dem von der Miete abgegebene Gase wenigstens teilweise in diese zur Belüftung zurückgeführt werden.

Aufgabe der Erfindung ist es, ein Verfahren der eingangs angegebenen Art anzugeben, das möglichst schnell und intensiv durchgeführt werden kann.

Erfindungsgemäß wird diese Aufgabe durch die Merkmale des Anspruchs 1 gelöst. Alternative Lösungen sind Gegenstand der Ansprüche 3 und 5.

Gemäß der Erfindung wird bei einem Verfahren zur Kompostierung von Abfällen, bei dem das Rottegut in einen Behälter eingebracht wird und unter Luftzuführung mikrobiell abgebaut wird, der Rottevorgang derart durchgeführt bzw. geregelt, daß eine möglichst große CO₂-Menge pro Zeit erzeugt wird, wobei die zugeführte Luftmenge pro Zeit derart eingestellt wird, daß eine maximale Wärmemenge pro Zeit im Rottegut erzeugt wird. Alternativ wird der Rottevorgang derart durchgeführt bzw. geregelt, daß eine möglichst große CO₂-Menge pro Zeit erzeugt wird, wobei ein maximaler Sauerstoffverbrauch im Rottegut pro Zeit erzeugt wird. Nach einer weiteren Alternative wird der Rottevorgang derart durchgeführt bzw. geregelt, daß eine möglichst große CO₂-Menge pro Zeit erzeugt wird, wobei die zugeführte Luftmenge derart eingestellt wird, daß eine maximale Gewichtsabnahme des Rotteguts pro Zeit erzeugt wird.

Die CO₂-Menge pro Zeit ist dabei das Produkt des CO₂-Gehalts mit der Luftmenge pro Zeit. Nach Beendigung der Anfahrphase und zu Beginn der Abbauphase ist der CO₂-Gehalt im Rottebehälter (Reaktor) noch nicht allzu hoch. Bei den bisher bekannten Verfahren hat man während der Abbauphase möglichst viel Luft durch den Rottebehälter (Reaktor) geblasen, um die Mikroorganismen, die die Kompostierung bewirken, gut mit Sauerstoff zu versorgen und eine gute Durchlüftung des Reaktors zu gewährleisten. Die damit verbundene Folge eines verhältnismäßig geringen CO₂-Gehalts hat man dabei in Kauf genommen bzw. sogar als wünschenswert angesehen.

Die Erfindung beruht auf der Erkenntnis, daß es für eine möglichst schnelle und intensive Durchführung des Kompostierungsverfahrens nicht auf die durch den Reaktor geführte Luftmenge pro Zeit oder den CO₂-Gehalt ankommt, sondern auf die abgebaute CO₂-Menge pro Zeit als dem Produkt von CO₂-Gehalt und Luftmenge pro Zeit. Die abgebaute CO₂-Menge pro Zeit soll also maximiert werden. Ziel des Verfahrens ist es, eine möglichst große CO₂-Menge pro Zeit abzubauen, da dann der Rottevorgang am schnellsten und intensivsten durchgeführt wird. Im Vordergrund steht demnach die abgebaute CO₂-Menge pro Zeit, die maximiert werden soll. Die Erfindung beruht demnach auf der Erkenntnis, daß der gewünschte schnellstmögliche und intensivste, maximale Abbau der Abfälle dann erreicht wird, wenn auch eine maximale CO₂-Menge pro Zeit erzeugt wird. Eine schnellstmögliche Kompostierung der Abfälle korrespondiert mit einer maximalen erzeugten CO₂-Menge pro Zeit.

Zur Durchführung des erfindungsgemäßen Verfahrens wird demnach der Reaktor zunächst auf Betriebstemperatur hochgefahren, also auf eine Temperatur von 40° bis 50° C. Über einer Temperatur von 50° C sterben schon gewisse Organismen, die die Kompostierung bewirken, ab, sodaß diese 50° C nicht überschritten werden sollten.

In der dann anschließenden Phase wird das Verfahren derart durchgeführt bzw. geregelt, daß eine möglichst große CO₂-Menge pro Zeit erzeugt wird. Das Verfahren kann in einem geschlossenen Behälter durchgeführt werden. Das Rottegut muß nicht umgeschichtet werden.

Aus der DE-PS 36 37 393 ist es bekannt, die durch den Reaktor geführte Luftmenge durch Drehzahländerung des Ventilators oder durch Luftklappensteuerung zu verändern. Hierdurch kann die durch den Reaktor pro Zeiteinheit hindurchgeführte Luftmenge geändert werden. Eine Regelung zur Erzeugung einer möglichst großen CO₂-Menge pro Zeit ist damit jedoch nicht verbunden.

Aus der DE-PS 38 00 201 ist ein Verfahren zum Kompostieren von organischen Abfällen in geschlossenen Behältern bekannt, bei dem eine über eine modulierende CO₂-Regelung gesteuerte Zwangsbelüftung durchgeführt wird. Es wird allerdings nicht mit einem fest vorgegebenen CO₂-Sollwert gearbeitet, sondern mit einer modulierten Regelung, die - beginnend bei einem vorgegebenen minimalen Luftdurchsatz - so lange den Luftdurchsatz in gewissen Schaltintervallen steigert, bis der maximale CO₂-Gehalt, nicht aber die maximale CO₂-Menge pro Zeit, erreicht ist. Bei sinkendem CO₂-Gehalt regelt die Regelung in umgekehrter Reihenfolge den Luftdurchsatz zurück. Als Sollwert wird also der CO₂-Gehalt herangezogen, nicht, wie nach der Erfindung vorgesehen, die CO₂-Menge.

Die DE-AS 22 53 009 offenbart ein Verfahren zum Kompostieren von organischen Abfällen, bei dem die Abfälle einen Belüftungsreaktor von oben nach unten kontinuierlich durchlaufen und Luft von der Sohle des Belüftungsreaktors her den Abfällen kontinuierlich entgegengeführt wird. Damit Klärschlamm in einem Belüftungsreaktor direkt kompostiert werden kann, um diesen einer Verwertung zuführen zu können, wird zur Steuerung des Rotteprozesses von Klärschlamm, der mit Torf, Sägemehl, Stroh oder Rückgut vermischt ist, die mit reinem Sauerstoff angereicherte Luft in einer solchen Menge den Abfällen entgegengeführt, daß sich die Zone höchster Temperatur im oberen Drittel und die Zone niedrigster Temperatur an der Sohle, die Zone niedrigsten Sauerstoffgehaltes in der obersten Schicht und die Zone höchsten Sauerstoffgehaltes an der Sohle des Belüftungsreaktors befinden. Der Reaktor soll ausreichend Sauerstoff erhalten, um eine möglichst rasche Kompostiertung zu gewährleisten. Zur Steuerung des Rotteprozesses werden Luftgemischproben aus verschiedenen, vorzugsweise drei, Zonen, des vom Belüftungsreaktor umschlossenen Materialhaufwerkes entnommen und der CO₂-Gehalt dieser Proben festgestellt. Danach richtet sich dann die Belüftung. Auch bei der DE-AS 22 53 009 wird also der CO₂-Gehalt als Regelgröße verwendet, nicht aber die im Kompostierungsreaktor erzeugte CO₂-Menge pro Zeit.

Vorzugsweise wird der CO₂-Gehalt in der Abluft gemessen.

Die zugeführte Luftmenge pro Zeit kann derart eingestellt werden, daß der CO₂-Gehalt ansteigt. Nach dem erfindungsgemäßen Verfahren soll die CO₂-Menge pro Zeit maximiert werden. Zu diesem Zweck muß versucht werden, einen möglichst hohen CO₂-Gehalt zu erhalten. Hierfür wird eine vorübergehende Reduzierung der Luftmenge in Kauf genommen. Es hat sich nämlich gezeigt, daß durch eine nicht allzu große Reduzierung der Luftmenge pro Zeit ein Anstieg des CO₂-Gehalts erhalten werden kann, der das Absinken der Luftmenge pro Zeit überkompensiert. Das Produkt aus CO₂-Gehalt und Luftmenge pro Zeit, also die CO₂-Menge pro Zeit, wächst an, wenn die Luftmenge pro Zeit reduziert wird und hierdurch der CO₂-Gehalt überproportional ansteigt. Mit anderen Worten: Obwohl die zugeführte Luftmenge pro Zeit verkleinert wird, steigt die CO₂-Menge pro Zeit an, und zwar wegen des überproportionalen Anstieges des CO₂-Gehalts. Die zugeführte Luftmenge pro Zeit wird also verkleinert, sodaß der CO₂-Gehalt in der Abluft ansteigt.

Der CO₂-Gehalt darf allerdings einen bestimmten oberen Grenzwert nicht überschreiten. Wenn der CO₂-Gehalt in die Nähe dieses oberen Grenzwertes gekommen ist, wird die zugeführte Luftmenge pro Zeit wieder gesteigert. Dabei wird versucht, den bereits angestiegenen, hohen CO₂-Gehalt aufrecht zu erhalten, um so insgesamt die CO₂-Menge zu maximieren. Es wird also die zugeführte Luftmenge pro Zeit gesteigert, wenn der CO₂-Gehalt in der Abluft einen oberen Grenzwert erreicht oder überschreitet. Vorzugsweise wird dabei die zugeführte Luftmenge pro Zeit derart geregelt, daß der CO₂-Gehalt möglichst nahe bei einem oberen Grenzwert liegt. Es wird also folgendes erreicht: Der CO₂-Gehalt liegt möglichst nahe bei einem oberen Grenzwert. Gleichzeitig steigt die zugeführte Luftmenge pro Zeit an. Hierdurch steigt dann ebenfalls - wie gewünscht - die CO₂-Menge pro Zeit an.

Die CO₂-Menge pro Zeit kann bestimmt werden durch Multiplikation des CO₂-Gehaltes mit der Abluftmenge pro Zeit, die ihrerseits der Zuluftmenge pro Zeit entspricht. Die gerätetechnisch am wenigsten aufwendige Meßmethode ist die Methode der CO₂-Messung. Der CO₂-Gehalt kann unmittelbar gemessen werden. Allerdings wird die CO₂-Menge pro Zeit nicht notwendigerweise nur aus dem CO₂-Gehalt und der Luftmenge pro Zeit berechnet. Es können vielmehr noch andere Größen in die Berechnung eingehen, nämlich Druck und Temperatur sowohl der Abluft als auch der Zuluft. Es ist auch möglich, den Sauerstoffgehalt der zugeführten Luft anzureichern, was dann ebenfalls bei der Berechnung berücksichtigt werden muß. Wenn der CO₂-Gehalt in Volumenprozent gemessen wird, kann auch noch eine Umrechnung in Gewichtsanteile erforderlich sein. Die entsprechenden Umrechnungsformeln sind grundsätzlich bekannt.

Gemäß der Erfindung wird aus der pro Zeit erzeugten Wärmemenge im Reaktor auf die pro Zeit erzeugte CO₂-Menge im Reaktor geschlossen. Dementsprechend wird nach einer Alternative der Erfindung die zugeführte Luftmenge pro Zeit derart eingestellt, daß eine maximale Wärmemenge pro Zeit im Rottegut erzeugt wird. Die pro Zeit erzeugte Wärmemenge kann aus einer Multiplikation der Temperatur mit der Abluftmenge pro Zeit bzw. Zuluftmenge pro Zeit berechnet werden, wobei zusätzliche Faktoren wie beispielsweise die Wärmekapazität der Luft in die Berechnung mit eingehen. In die Berechnung geht weiterhin die Temperaturdifferenz zwischen Abluft und Zuluft ein. Die Wärmemenge pro Zeit kann demnach aus der Temperatur der Abluft, der Temperatur der Zuluft und der Abluftmenge bzw. Zuluftmenge pro Zeit ermittelt werden. Im stationären Betrieb ist die Abluftmenge pro Zeit genauso groß wie die Zuluftmenge pro Zeit.

Gemäß einer weiteren Alternative der Erfindung wird aus dem im Reaktor pro Zeit verbrauchten Sauerstoff auf die im Reaktor erzeugte CO₂-Menge pro Zeit geschlossen. Dementsprechend ist diese Alternative des erfindungsgemäßen Verfahrens dadurch gekennzeichnet, daß die zugeführte Luftmenge pro Zeit derart eingestellt wird, daß ein maximaler Sauerstoffverbrauch im Rottegut pro Zeit erzeugt wird. Der Sauerstoffgehalt in der Abluft kann durch eine Sonde direkt gemessen werden. Der Sauerstoffgehalt in der Zuluft kann ebenfalls gemessen werden, oder aber, da Umgebungsluft verwendet wird, als bekannt vorausgesetzt werden. Die pro Zeit verbrauchte Sauerstoffmenge wird bestimmt aus einer Multiplikation des Sauerstoffgehalts (bzw. der Differenz des Sauerstoffgehalts der Abluft mit dem Sauerstoffgehalt der Zuluft) und der Luftmenge pro Zeit. Ein zusätzlicher Vorteil der Sauerstoffmessung liegt darin, daß anhand der Messung des Sauerstoffgehaltes in der Abluft gewährleistet werden kann, daß der Sauerstoffgehalt der Abluft nicht unter denjenigen Grenzwert absinkt, bei dem die aerobe Reaktion in eine anaerobe Reaktion umschlägt. Dieser Sauerstoffgehalt liegt bei 10 bis 17 %. Unter 10 % liegt Toxizität für alle Organismen vor. Der Grenzwert für den kritischen Sauerstoffgehalt hängt vom CO₂-Gehalt ab, der im Verlauf des Verfahrens ansteigt. Es hat sich gezeigt, daß der Sauerstoffgehalt in der Abluft nicht unter 17 % sinken sollte. Dieser Sauerstoffgehalt hat sich als optimal herausgestellt. Möglich sind aber auch niedrigere Sauerstoffgehalte bis herab zu 10 %.

Es ist nach einer weiteren Alternative des erfindungsgemäßen Verfahrens auch möglich, aus der Gewichtsabnahme des Rotteguts pro Zeit auf die pro Zeit erzeugte CO₂-Menge zu schließen. Diese Alternative des Verfahrens besteht demnach darin, die zugeführte Luftmenge derart einzustellen, daß eine maximale Gewichtsabnahme des Rotteguts pro Zeit erzeugt wird. Das Gewicht des Rotteguts kann durch in den Behälter eingebaute Meßgeräte direkt gemessen werden.

Es stehen also insgesamt vier verschiedene Meßmethoden zur Verfügung, die auch miteinander kombiniert werden können: CO₂-Messung, Wärmemengen-Messung, O₂-Messung und Gewichtsmessung.

Ergänzend kann die zugeführte Luftmenge pro Zeit derart eingestellt werden, daß eine vorgegebene Temperatur im Rottegut von vorzugsweise 50° C nicht überschritten wird. Weiterhin kann ergänzend die zugeführte Luftmenge derart eingestellt werden, daß ein vorgegebener Sauerstoffgehalt von 17 % nicht unterschritten wird.

Vorzugsweise wird das Verfahren beendet, wenn trotz optimaler Regelung die CO₂-Menge pro Zeit in der Abluft nicht mehr ansteigt. Danach kann die Hygienisierung durchgeführt werden, beispielsweise durch Umluftführung. Zu dem Zeitpunkt, zu dem die pro Zeit erzeugte CO₂-Menge trotz optimaler Regelung des Verfahrens nicht mehr ansteigt, kann die Abbauphase als beendet betrachtet werden. Dies ist unter wirtschaftlichen Gesichtspunkten sinnvoll, da der maximale CO₂-Abbau pro Zeit überschritten worden ist. Es wird also so lange technisch abgebaut, solange ein intensiver CO₂-Verbrauch auftritt; danach wird die technische Abbauphase beendet und gegebenenfalls mit der Hygienisierungsphase begonnen. Man kann auch eine gewisse Nachlaufzeit von etwa einigen Stunden oder auch von einem Tag vorsehen, um der Tatsache Rechnung zu tragen, daß die Messung biologischer Prozesse nicht ganz exakt möglich ist und auch relativ träge sein kann.

Wie oben bereits beschrieben, kann die Regelung des Verfahrens auf die pro Zeit erzeugte Wärmemenge ausgerichtet werden, also darauf, die gesamte durch den biologischen Abbau entstehende Wärmemenge pro Zeit zu maximieren. Diese Wärmemenge kann durch die Enthalpiedifferenz zwischen der Abluft und der Zuluft bestimmt werden. Es ist auch möglich, nur auf die im Wasserdampf steckende Energie bzw. Enthalpie abzustellen.

Ein sicheres Anfahren, also In-Gang-Bringen des Verfahrens, ist nicht immer ohne weiteres möglich. Unter normalen Bedingungen, insbesondere im Sommer, steigt die Temperatur im Rottegut nach der Befüllung des Reaktors von selbst an, der Reaktor kann also problemlos von selbst angefahren werden. Insbesondere bei tiefen Temperaturen ist dies jedoch nicht stets ohne weiteres möglich. Es kann vorkommen, daß die in den Reaktor eingebrachten Abfälle nicht von selbst auf Temperatur kommen, daß also die ansonsten eintretende und für die Kompostierung auch erforderliche Temperatursteigerung im Rottegut nicht von selbst erzeugt wird.

Dieses Problem wird dadurch gelöst, daß während der Anfahrphase die aus dem Rottegut austretende Abluft dem Rottegut erneut zugeführt wird und daß von Anfang an oder dann auf Umluftbetrieb geschaltet wird, wenn die Temperatur im Rottegut nach einer bestimmten Zeit von vorzugsweise 1 bis 5 Stunden nicht angestiegen ist. Hierdurch kann die Kompostierung zuverlässig in Gang gebracht werden, ein die Kompostierung durchführender Reaktor also zuverlässig "angefahren" werden. Es ist möglich, von Anfang an die aus dem Rottegut austretende Abluft dem Rottegut erneut zuzuführen, also von Anfang an den Umluftbetrieb durchzuführen. Es ist aber auch möglich, erst dann auf Umluftbetrieb zu schalten, wenn die Temperatur im Rottegut nach einer bestimmten Zeit nicht angestiegen ist. Vorzugsweise beträgt diese Zeit 1 bis 5 Stunden.

Gemäß dieser Verfahrensweise kann insbesondere in kalten Wintermonaten durch Umluftbetrieb während der Anfahrphase die mikrobiologische Aktivität schneller in Gang gebracht werden. Die aus dem Rottegut austretende, wasserdampfhaltige, heiße Abluft wird während der Anfahrphase dem Rottegut erneut zugeführt. Die Übertragung der in der Abluft in geringem Maße enthaltenen biologischen Wasserdampfbildungsenthalpie infolge Rückkondensation auf die Abfallpartikel ermöglicht ein sicheres Anfahren der Kompostierungsreaktion. Es wird auf die DE-PS 36 37 393 verwiesen. Durch das beschriebene Verfahren ist ein schneller Übergang von der Phase 1 (Anlaufphase) in die Phase 2 (exponentielle Phase) der in der DE-PS 36 37 393 in der Fig. 1 dargestellten "Wachstumskurve" möglich.

Die Abluftrückführung kann - je nach Bedarf - mehrmals durchgeführt werden. Es ist aber auch möglich, die Abluftrückführung kontinuierlich durchzuführen.

Vorzugsweise wird die Temperatur des Rottegutes gemessen. Wenn im Rottegut nach einer bestimmten Zeit von beispielsweise 1 bis 5 Stunden noch keine Temperatursteigerung aufgetreten ist, wird auf Umluft geschaltet. Statt dessen oder zusätzlich ist es auch möglich, die Abluft eines anderen Reaktors, der bereits in Betrieb ist, zuzuführen. Diese Abluft eines anderen Reaktors ist ebenfalls mit CO₂ und Wasserdampf beladen, was sich für den Anfahrvorgang günstig auswirkt.

Während der Umluftphase steigt der CO₂-Gehalt, beispielsweise gemessen in Volumen-Prozent, an. Der CO₂-Gehalt darf einen bestimmten Grenzwert nicht überschreiten, da andernfalls anaerobe Bedingungen eintreten würden. Die Umluftphase wird dann beendet, wenn der CO₂-Gehalt einen vorgegebenen Grenzwert überschreitet. Es wird dann Frischluft zugeführt. Es ist auch möglich, den Umluftbetrieb in der Weise zu reduzieren, daß nur noch ein Teil der Umluft zugeführt wird und gleichzeitig Frischluft zugemischt wird.

Die Umluftphase kann dann beendet werden, wenn der CO₂-Gehalt einen vorgegebenen Grenzwert von beispielsweise 3 % überschreitet. Versuche haben ergeben, daß ein CO₂-Gehalt von weniger als 3 % stets zu zufriedenstellenden Ergebnissen führt. Auch ein Grenzwert von 4 % oder 5 % oder mehr kann noch zulässig sein.

Der CO₂-Gehalt kann direkt gemessen werden. Es ist aber auch möglich, den O₂-Gehalt in der Abluft zu messen. Wenn der O₂-Gehalt unter einen bestimmten Grenzwert von beispielsweise 18 % oder auch weniger fällt, wird der Umluftbetrieb beendet und wieder auf Frischluftbetrieb geschaltet. Anschließend wird wieder mit Frischluft gefahren, bis ein unterer Grenzwert des CO₂-Gehaltes erreicht ist bzw. ein entsprechender oberer Grenzwert des O₂-Gehaltes. Der CO₂-Grenzwert, bei dem der Frischluftbetrieb beendet wird und wieder auf Umluftbetrieb geschaltet wird, könnte theoretisch derjenige der Frischluft sein. Da jedoch bereits im anfahrenden Reaktor eine gewisse Menge CO₂ erzeugt wird, muß dieser Grenzwert in der Praxis etwas höher sein. Hinzu kommt, daß der CO₂-Gehalt der Frischluft nur etwa 0,03 % beträgt, was meßtechnisch sehr schwierig zu erfassen ist. In der Praxis muß also ein Kompromiß gefunden werden. Ist der Grenzwert für den CO₂-Gehalt, bei dem von Frischluft wieder auf Umluft geschaltet wird, zu niedrig, dauert die Frischluftphase zu lange und es besteht die Gefahr, daß die gewünschte Temperatursteigerung nicht eintritt bzw. daß die bereits durch die vorherige Umluftphase erzeugte Temperatursteigerung wieder vollständig zunichte gemacht wird. Ist der Grenzwert für den CO₂-Gehalt, bei dem von Frischluft wieder auf Umluft geschaltet wird, zu hoch, ist die Frischluftphase zu kurz, und die anschließende Umluftphase ist ebenfalls sehr kurz.

Anstelle des CO₂-Gehalts oder des O₂-Gehalts kann auch der Wasserdampfgehalt in der Abluft als Grenzwert während der Anfahrphase verwendet werden, um festzustellen, wann von Umluft wieder auf Frischluft und umgekehrt geschaltet werden muß.

Die Zumischung der Frischluft kann derart geregelt werden, daß der Grenzwert des CO₂-Gehalts bzw. der Grenzwert des O₂-Gehalts bzw. der Grenzwert des Wasserdampfgehalts eingehalten wird. Das erfindungsgemäße Verfahren wird dann auf optimale Weise durchgeführt.

Nach einer weiteren vorteilhaften Weiterbildung kann die Menge der Umluft reduziert werden. Dies ist insbesondere dann von Vorteil, wenn bei der Durchführung der bereits beschriebenen Verfahrensschritte eine Temperatursteigerung im Rottegut nicht eintreten sollte. Durch die Reduzierung der Umluftmenge kann dann eine Temperatursteigerung erreicht werden, die Kompostierung also zuverlässig in Gang gesetzt werden.

Nach einer vorteilhaften Weiterbildung wird die Anfahrphase beendet, also nicht mehr auf Umluft geschaltet, wenn während der Frischluftphase bzw. während der Zumischung von Frischluft die Temperatur im Rottegut ansteigt oder wenn die Temperatur im Rottegut einen Grenzwert erreicht, der vorzugsweise 30° C beträgt. Das Verfahren ist dann erfolgreich durchgeführt worden.

Ein Ausführungsbeispiel der Erfindung wird nachstehend anhand der beigefügten Zeichnung im einzelnen beschrieben. In der Zeichnung zeigt:
- Fig. 1: den Verlauf der Temperatur über der Zeit in einem Rottebehälter,
- Fig. 2: ein i-x-Diagramm (Enthalpie-Wassergehalt-Diagramm) und
- Fig. 3: den Verlauf verschiedener Kenngrößen über der Zeit.

Das Abfallrottegemisch wird auf einer luftdurchlässigen Fläche eines geschlossenen Rottebehälters so aufgeschichtet, daß ein luftdurchlässiges Gefüge der zu kompostierenden Abfallteile entsteht. Nach dem Verschluß der Einfüllöffnung des Rottebehälters bzw. dessen Einfüllöffnungen wird der Verfahrensablauf gestartet. Der zum aeroben Abbau erforderliche Sauerstoff kann durch Frischluftzufuhr oder durch Zuführung reinen Sauerstoffes erfolgen. Den Lufttransport besorgen ein oder mehrere Gebläse, deren Motoren über Solarstrom oder über den üblichen Netzanschluß bzw. beides angetrieben werden. Die zu kompostierenden Abfallteile sind das Substrat, auf dem die Mikroorganismen leben. Es besteht aus biologisch leichter und biologisch schwerer abbaubaren Kohlendioxid-Wasserstoff-Verbindungen. Die Zuführung von Sauerstoff erlaubt den aeroben Organismen (Bakterien und Pilzen), die vorgenannten Verbindungen aufzulösen und daraus nicht nur die zur eigenen Existenz erforderliche Energie zu gewinnen, sondern auch infolge einer in kleinen Schritten verlaufenden sogenannten "biochemischen Knallgasreaktion" (O + H₂ = OH + H + Freie Energie) eine daraus resultierende Wärmeenergiemenge freizusetzen. Die so in sehr kurzer Zeit freigesetzte große Energiemenge (57 Kcal/mol) abzüglich der für den Eigenaufbau der Mikroorganismenzellen benötigten Energiemenge (4,8 Kcal/mol) führt zu einem Wärmestau und damit zur Dampfbildung im Mikroklima. Da die Wärme erst mit einer gewissen Zeitverzögerung abgeführt werden kann, bildet sich an den Oberflächen der den Mikroklimaraum begrenzenden kälteren Oberflächen durch Taupunktunterschreitung Kondensat, dessen Temperatur in dem Maße steigt, in dem sich der Körper unter der Oberfläche erwärmt.

Die Erwärmung wird auf natürliche Weise dadurch begrenzt, daß die Organismen selbst nur bestimmte Temperaturen aushalten können (erwünschte Voraussetzung zur Hygienisierung). Ohne "äußeren Einfluß" drosseln sie ihren Stoffwechsel, somit die Energiefreisetzung in das sie umgebende Mikroklima und sichern so ihre weitere Existenz (z.B. Sporenbildung).

Wenn während der Anfahrphase bei Frischluftbetrieb die Temperatur im Rottegut über eine Zeit zwischen einer und fünf Stunden nicht ansteigt, wird auf Umfluftbetrieb geschaltet. Es ist aber auch möglich, hiervor unabhängig sofort mit dem Umluftbetrieb zu beginnen. Während des Umluftbetriebes wird der CO₂-Gehalt in der Abluft gemessen. Wenn der CO₂-Gehalt in der Abluft einen vorgegebenen Grenzwert von 3 % überschreitet, wird wieder auf Frischluftbetrieb geschaltet. Statt dessen kann Frischluft im erforderlichen Maß zugemischt werden. Es kann also der Umluftbetrieb unter Zumischung von Frischluft aufrechterhalten werden. Während des Frischluftbetriebes bzw. während des Umluftbetriebes bei gleichzeitiger Zumischung von Frischluft werden weiterhin Temperatur und CO₂-Gehalt gemessen. Wenn die Temperatur während des Frischluftbetriebes bzw. während der Zumischung von Frischluft ansteigt, kann die Anfahrphase beendet werden. Es ist aber auch möglich, die Anfahrphase dann zu beenden, wenn die Temperatur im Rottegut einen Grenzwert von beispielsweise 30° C erreicht hat.

Wenn die Temperatur während des Frischluftbetriebes nicht ansteigt, wird wieder auf Umluftbetrieb geschaltet, wenn der CO₂-Gehalt einen unteren Grenzwert von 1 % unterschreitet. Anschließend werden die beschriebenen Verfahrensschritte solange wiederholt, bis während des Frischluftbetriebes die Temperatur im Rottegemisch ansteigt oder bis eine vorgegebene Temperatur von beispielsweise 30° C erreicht worden ist. Dann ist die Anfahrphase beendet.

Zur Verbesserung des Anfahrverhaltens kann die pro Zeit durch den Rottebehälter zugeführte Luftmenge reduziert werden. Es hat sich gezeigt, daß hierdurch ein besseres Anfahren des Reaktors ermöglicht wird.

In einem praktischen Beispiel werden einem Rottebehälter von 50 m³ Inhalt im Winter 300 m³/h und im Sommer 500 m³/h Luft zugeführt. Von Anfang an wird die aus dem Rottegut austretende Abluft dem Rottegut erneut zugeführt, also Umluftbetrieb durchgeführt. Hierdurch steigt der CO₂-Gehalt an. Sobald der CO₂-Gehalt das zulässige Maximum erreicht hat, wird Frischluft derart zudosiert, daß der maximal zulässige CO₂-Gehalt nicht überschritten wird, sondern so gut wie möglich eingehalten wird. Wenn dann die Temperatur im Rottegut immer noch nicht ansteigt, wird die pro Zeit durch den Reaktor geführte Luftmenge in Schritten von 20 bis 30 m³/h pro Stunde vermindert, bis zu einem unteren Grenzwert von 150 m³/h. Es hat sich gezeigt, daß der Reaktor bei dieser Verfahrensführung immer "anspringt", die Kompostierung also immer in Gang gesetzt werden kann.

Nach der Anfahrphase wird die sogenannte Abbauphase durchgeführt. Hierbei werden die Abfälle unter Luftzuführung mikrobiell abgebaut.

Der Reaktor wird so geregelt, daß eine möglichst große CO₂-Menge pro Zeit erzeugt wird. Gleichzeitig wird dafür gesorgt, daß die Temperatur im Rottegut 50° C nicht überschreitet. Weiterhin wird dafür gesorgt, daß die im Reaktor befindliche Masse nicht unter Sauerstoffmangel leidet, daß der Sauerstoffgehalt also nicht unter 17 % absinkt. Der Reaktor wird in dieser Weise unter optimalen Bedingungen gefahren. Die pro Zeit erzeugte CO₂-Menge als Produkt von CO₂-Gehalt und Luftmenge pro Zeit steigt an. Der Anstieg ist zunächst relativ steil und wird dann allmählich flacher. Ab einem bestimmten Zeitpunkt fällt die pro Zeit erzeugte CO₂-Menge trotz der optimalen Regelung ab. Zu diesem Zeitpunkt wird das Verfahren beendet und die Hygienisierung durch Umluftführung begonnen.

In einem praktisch ausgeführten Beispiel wird die pro Zeit abgebaute CO₂-Menge berechnet aus dem gemessenen CO₂-Gehalt und der pro Zeit durch den Reaktor hindurchgeführten Luftmenge. Diese Berechnung wird alle 0,5 Stunden wiederholt. Aus der Differenz zweier aufeinanderfolgender Meßwerte kann die Änderung der CO₂-Menge pro Zeit bestimmt werden. Wenn die pro Zeit erzeugt CO₂-Menge ansteigt, wird die durch den Reaktor geführte Luftmenge um 50 m³/h erhöht. Dies geschieht bis zu einer maximalen Luftmenge von 1200 m³/h. Ab dann wird die im Reaktor erzeugte CO₂-Menge pro Zeit beobachtet. Wenn diese sinkt, wird die Abbauphase beendet und die Hygienisierungsphase begonnen.

Während der Abbauphase kann durch geregelten technischen Eingriff ein ständiger Stoff- und Generationswechsel solange aufrecht erhalten werden, bis das leichter verfügbare Substrat zur Neige geht. Bevor dieses ganz aufgezehrt ist, wird bei den ersten Anzeichen zurückgehender Stoffwechselintensität (Überschreitung der Leistungsmaxima in den Stoffwechselproduktmengen) die Hygienisierungsphase eingeleitet. Hierbei werden durch Umluftführung die Stoffwechselprodukte im Umluftstrom angestaut. Der in das Rottgemisch zurückgeführte Wasserdampf kondensiert nun auch an jenen Abfallpartikeln aus (insbesondere in den Randzonen des Rottegemischkörpers), die zuvor durch biologische Hydrolyse bei sofortiger Wärmeabfuhr lediglich getrocknet, aber noch nicht entkeimt wurden. Mit feuchter Hitze kann eine schnellere und wirkungsvollere Entkeimung durchgeführt werden als mit trockener Hitze. Durch Unterschreitung des Taupunktes an der Oberfläche dieser Abfallteile steigt hier durch Übertragung der Kondensationsenergie die Temperatur jetzt auch über die durch pathogene Organismen ertragbare Temperatur an. Die Organismen werden daher jetzt abgetötet. Die Dauer der Einwirkzeiten des heißen, feuchten Abluft-Wasserdampf-Gemisches auf die pathogenen Organismen richtet sich grundsätzlich nach den in dem Abfallgemisch zu erwartenden pathogenen Mikroorganismen, deren Abtötungsdauer wissenschaftlich ermittelt wurde (siehe vorgenannter Literaturhinweis "Müll und Abfall").

Wenn die Hygienisierung abgeschlossen ist, wird von Umluftbetrieb auf Frischluftbetrieb umgeschaltet und die durch Rückkondensation verbliebene Restfeuchte aus dem Rottegut ausgetragen. Während dieser Phase wird zunächst über einen Luft-Luft-Wärmetauscher ein - dem Wirkungsgrad des Wärmetauschers entsprechender - Teil der langsam sinkenden Abluftwärme auf die Frischluft übertragen. Durch Hinzuschalten einer weiteren Wärmequelle, beispielsweise eines parallel betriebenen Rottesilos, kann der Austrocknungsprozeß beschleunigt werden. Wenn die aus dem Rottegut ausgetragene Abluft die gleiche Temperatur hat wie die zugeführte Frischluft, ist der Abbau der biologisch leicht abbaubaren organischen Abfallbestandteile beendet, und der nun entstandene "Kompost" wird dem Rottesilo entnommen.

Der so durchgeführte Betrieb der Kompostierung ermöglicht weiterhin die Verdunstung von nährstoffreichem, extern abfallendem Abwasser, beispielsweise Gülle oder Sickerwasser aus biologischen Prozessen. Dabei werden die Flüssigkeiten solange im Kreislauf durch das Rottesilo gepumpt und großflächig an den Wänden des Behälters (Reaktors) verrieselt, bis das Wasser verdunstet ist. Die Nähr- und Feststoffe bleiben dann, biologisch nicht mehr reagierend, in dem Kompost zurück.

In einem praktisch ausgeführten Beispiel dauert die Hygienisierung 1 bis 3 Tage. Wenn die Hygienisierung besonders schnell durchgeführt werden soll, dauert sie nur einen Tag. Sie kann allerdings auch über drei Tage durchgeführt werden, um sie besonders gründlich und vollständig durchzuführen, also um insbesondere das gesamte Haufwerk zu erfassen und um ein möglichst breites Organismenspektrum abzutöten. Die Hygienisierung kann nach zwei Tagen beginnen. Wenn die Hygienisierung zu früh beginnt, können Organismen abgetötet werden, die für die Hygienisierung noch benötigt werden. Beginnt man mit der Hygienisierung zu spät, kann die erforderliche Wärme vom Reaktor selbst nicht mehr erzeugt werden, muß also energieaufwendig von außen zugeführt werden.

Unmittelbar nach Durchführung der Hygienisierung kann in der aus der DE-PS 36 37 393 an sich bekannten Weise trockengeblasen werden.

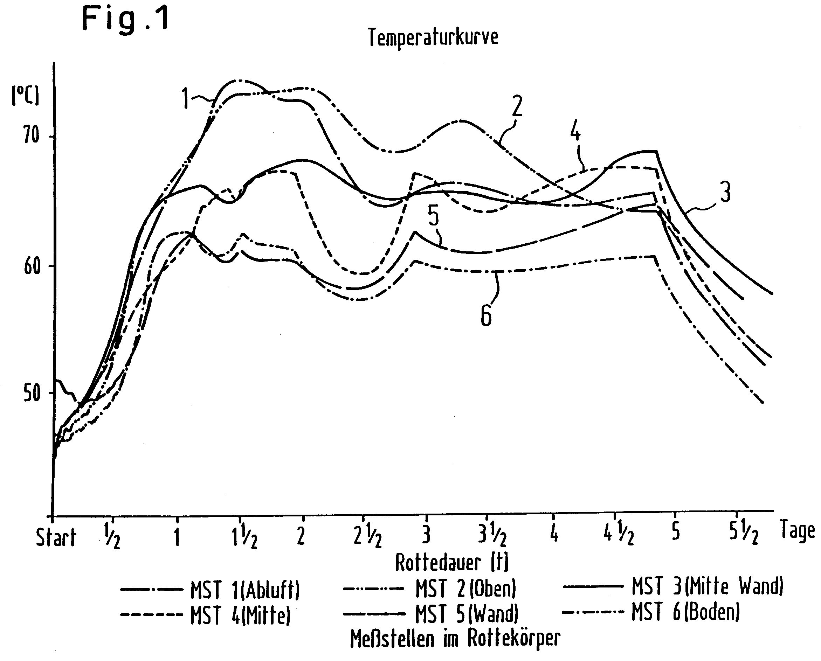

Die Figur 1 zeigt die Temperaturkurven eines Rottekörperquerschnittes. Die Kurve 1 stellt die Temperatur der Abluft dar, die Kurve 2 die oben im Behälter herrschende Temperatur, die Kurve 3 die in der Wandmitte des Behälters herrschende Temperatur, die Kurve 4 die in der Mitte des Behälters herrschende Temperatur, die Kurve 5 die an der Wand des Behälters herrschende Temperatur und die Kurve 6 die am Boden des Behälters herrschende Temperatur. Auf der waagerechten Achse ist die Zeit in Tagen aufgetragen. Die Temperatur ist in °C dargestellt. Aus der Figur 1 geht hervor, daß auch am kritischsten Punkt des Reaktors, nämlich am Boden (Kurve bzw. Meßstelle 6) die Temperatur von 60° C über mehrere Tage hinweg überschritten werden kann. Aus der Figur 1, die die Hygienisierungsphase zeigt, geht also hervor, daß diese Hygienisierungsphase tatsächlich über vier Tage hinweg durchführbar ist. Erforderlich sind allerdings in der Praxis in der Regel nur drei Tage, unter Umständen sogar noch weniger.

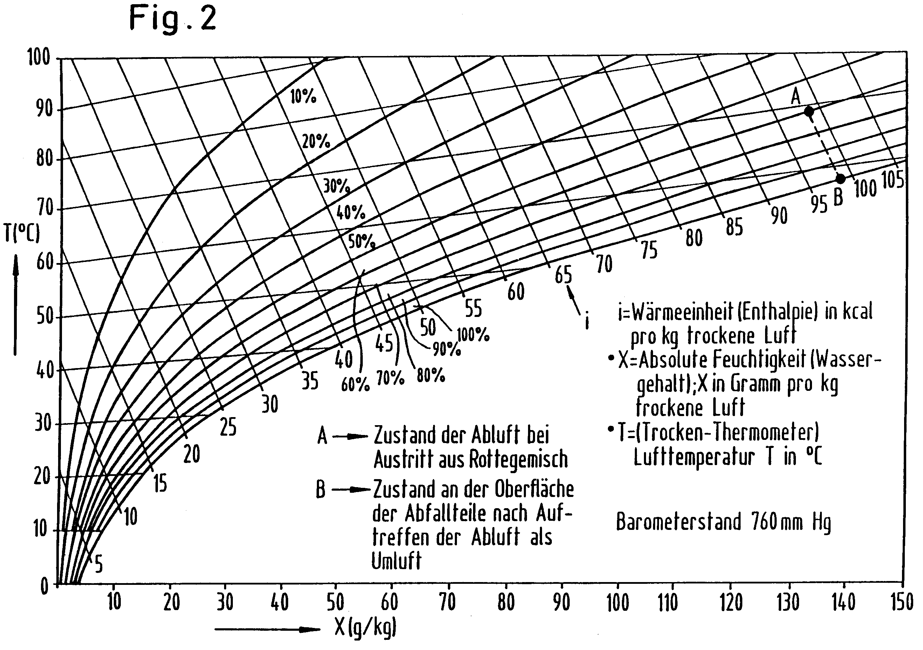

Die Oberflächentemperatur der Abfallteile folgt hierbei dem Verlauf der Sättigungskennlinie des "i-x-Diagrammes" für feuchte Luft entsprechend der Darstellung der Figur 2. Dort ist der Wärmeinhalt (Enthalpie) i in kcal pro kg trockene Luft über der absoluten Feuchtigkeit (Wassergehalt) x in Gramm pro kg trockene Luft aufgetragen. Die Lufttemperatur (Trocken-Thermometer) T ist in Grad C angegeben. Es wird von einem Barometerstand von 760 mm Hg ausgegangen. Der eingetragene Punkt A bezeichnet den Zustand der Abluft bei Austritt aus dem Rottegemisch. Der weiterhin eingetragene Punkt B bezeichnet den Zustand an der Oberfläche der Abfallteile nach Auftreffen der Abluft als Umluft. Im Punkt A beträgt die Temperatur 69° C. Die Enthalpie i beträgt etwa 98,5 kcal/kg, die absolute Feuchtigkeit beträgt etwa 132 g/kg.

Im Punkt B beträgt die Enthalpie i ebenfalls etwa 98,5 kcal/kg. Die absolute Feuchtigkeit beträgt dort etwa 138 g/kg, die Temperatur beträgt 58° C.

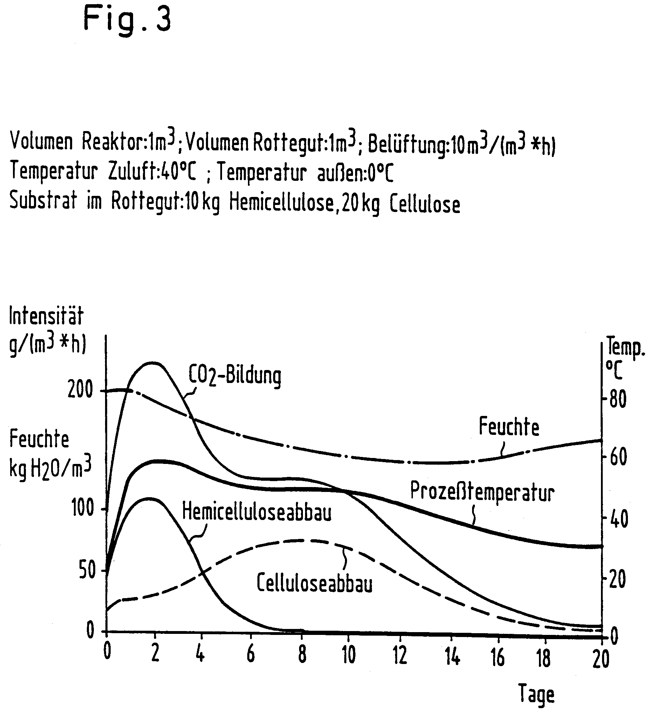

Die Fig. 3 zeigt den Verlauf verschiedener Kenngrößen über der Zeit. Die Prozeßtemperatur steigt zunächst an. Sobald die CO₂-Bildung nach zwei Tagen ihr Maximum erreicht, wird die Hygienisierung durchgeführt, die etwa drei bis fünf Tage dauert. Unmittelbar nach der Hygienisierung wird Trockengeblasen.

Um während der Hygienisierung die Temperatur zu steigern, kann die durch den Rottebehälter hindurchgeführte Luftmenge pro Zeit reduziert werden. Die Temperatur steigt dann bis über 60° C an. Sie kann auf dieser Temperatur über eine Luftmengensteuerung gehalten werden.

Im Rahmen der vorliegenden Erfindung gelten als "leichter zersetzbare Abfallbestandteile": Pflanzliche Schleime mit Hemicellulosen als Inhaltsstoffe oder die plasmatische Flüssigkeit tierischer Zellen sowie Zellulose in unverholztem Zustand als Zellwände junger Pflanzen. Als "schwer zersetzbare Abfallbestandteile" gelten: Cellulose in verholztem Zustand bei älteren Pflanzen, Cellulose-/Lignin-Verbindungen tierischer Zellwände, Chitinhüllen von Kerbtieren. Je weiter die Verholzung bzw. der Lignineinbau in die Zellwände fortschreitet, um so fester werden die schwer zersetzbaren Abfallbestandteile und um so höher wird ihr Molekulargewicht als Bewertungskriterium. Aus der Fig. 3 ist der Abbauunterschied von Hemicellulose zu unverholzter Cellulose deutlich zu erkennen.-

## Patentansprüche

1. Verfahren zur Kompostierung von Abfällen, bei dem das Rottegut in einen Behälter eingebracht wird und unter Luftzuführung mikrobiell abgebaut wird, wobei der Rottevorgang derart durchgeführt bzw. geregelt wird, daß eine möglichst große CO₂-Menge pro Zeit erzeugt wird, wobei die zugeführte Luftmenge pro Zeit derart eingestellt wird, daß eine maximale Wärmemenge pro Zeit im Rottegut erzeugt wird.

2. Verfahren nach Anspruch 1, dadurch gekennzeichnet, daß die Wärmemenge pro Zeit aus der Temperatur der Abluft, der Temperatur der Zuluft und er Abluftmenge bzw. Zuluftmenge pro Zeit ermittelt wird.

3. Verfahren zur Kompostierung von Abfällen, bei dem das Rottegut in einen Behälter eingebracht wird und unter Luftzuführung mikrobiell abgebaut wird, wobei der Rottevorgang derart durchgeführt bzw. geregelt wird, daß eine möglichst große CO₂-Menge pro Zeit erzeugt wird, wobei ein maximaler Sauerstoffverbrauch im Rottegut pro Zeit erzeugt wird.

4. Verfahren nach Anspruch 3, dadurch gekennzeichnet, daß der Sauerstoffverbrauch pro Zeit aus dem Sauerstoffgehalt in der Abluft, dem Sauerstoffgehalt in der Zuluft und der Abluftmenge bzw. Zuluftmenge pro Zeit ermittelt wird.

5. Verfahren zur Kompostierung von Abfällen, bei dem das Rottegut in einen Behälter eingebracht wird und unter Luftzuführung mikrobiell abgebaut wird, wobei der Rottevorgang derart durchgeführt bzw. geregelt wird, daß eine möglichst große CO₂-Menge pro Zeit erzeugt wird, wobei die zugeführte Luftmenge derart eingestellt wird, daß eine maximale Gewichtsabnahme des Rotteguts pro Zeit erzeugt wird.

6. Verfahren nach einem der vorhergehenden Ansprüche, dadurch gekennzeichnet, daß die zugeführte Luftmenge pro Zeit gesteigert wird, wenn der CO₂-Gehalt in der Abluft einen oberen Grenzwert überschreitet.

7. Verfahren nach einem der vorhergehenden Ansprüche, dadurch gekennzeichnet, daß die zugeführte Luftmenge pro Zeit derart geregelt wird, daß der CO₂-Gehalt möglichst nahe bei einem oberen Grenzwert liegt.

8. Verfahren nach einem der vorhergehenden Ansprüche, dadurch gekennzeichnet, daß das Verfahren beendet wird, wenn trotz optimaler Regelung die CO₂-Menge pro Zeit in der Abluft nicht mehr ansteigt oder absinkt.

9. Verfahren nach einem der vorhergehenden Ansprüche, dadurch gekennzeichnet, daß die zugeführte Luftmenge pro Zeit derart eingestellt wird, daß eine vorgegebene Temperatur im Rottegut von vorzugsweise 50 °C nicht überschritten wird.

10. Verfahren nach einem der vorhergehenden Ansprüche, dadurch gekennzeichnet, daß die zugeführte Luftmenge derart eingestellt wird, daß ein vorgegebener Sauerstoffgehalt von vorzugsweise 17 % nicht unterschritten wird.

## Claims

1. Process for composting waste, in which the material undergoing biodegradation is introduced into a container and is microbially biodegraded while air is being fed in, the biodegradation operation being carried out or controlled in such a manner that as high a volume of CO₂ as possible is generated per unit time, the volume of air supplied per unit time being set in such a manner that a maximum amount of heat is generated per unit time in the material undergoing biodegradation.

2. Process according to Claim 1, characterized in that the amount of heat per unit time is determined from the temperature of the outgoing air, the temperature of the feed air and the volume of outgoing air or the volume of feed air per unit time.

3. Process for composting waste, in which the material undergoing biodegradation is introduced into a container and is microbially biodegraded while air is being fed in, the biodegradation operation being carried out or controlled in such a manner that as high a volume of CO₂ as possible is generated per unit time, a maximum oxygen consumption per unit time in the material undergoing biodegradation being generated.

4. Process according to Claim 3, characterized in that the oxygen consumption per unit time is determined from the oxygen content in the outgoing air, the oxygen content in the feed air and the volume of outgoing air or the volume of feed air per unit time.

5. Process for composting waste, in which the material undergoing biodegradation is introduced into a container and is microbially biodegraded while air is being fed in, the biodegradation operation being carried out or controlled in such a manner that as high a volume of CO₂ as possible is generated per unit time, the volume of air supplied being set in such a manner that a maximum Weight decrease in the material undergoing biodegradation is generated per unit time.

6. Process according to one of the preceding claims, characterized in that the volume of air supplied per unit time is increased if the CO₂ content in the outgoing air exceeds an upper limit value.

7. Process according to one of the preceding claims, characterized in that the volume of air supplied per unit time is controlled in such a manner that the CO₂ content lies as close as possible to an upper limit value.

8. Process according to one of the preceding claims, characterized in that the process is ended when, despite optimum control, the CO₂ volume per unit time in the outgoing air no longer rises or falls.

9. Process according to one of the preceding claims, characterized in that the volume of air supplied per unit time is set in such a manner that a predetermined temperature in the material undergoing biodegradation of preferably 50°C is not exceeded.

10. Process according to one of the preceding claims, characterized in that the volume of air supplied is set in such a manner that the oxygen content does not fall below a predetermined level of preferably 17%.

## Revendications

1. Procédé pour le compostage de déchets où la matière en pourriture est introduite dans un récipient et elle est décomposée par voie microbienne avec apport d'air, le processus de pourrissage étant accompli ou respectivement réglé de manière que soit produite une aussi grosse quantité que possible de CO₂ par unité de temps, la quantité d'air amené par unité de temps étant ajustée de manière que soit produite une quantité maximale de chaleur par unité de temps dans la matière en pourriture.

2. Procédé selon la revendication 1, caractérisé en ce que la quantité de chaleur par unité de temps est obtenue à partir de la température de l'air d'échappement, de la température de l'air amené et de la quantité d'air d'échappement ou respectivement la quantité d'air amené par unité de temps.

3. Procédé pour le compostage de déchets dans lequel la matière en pourriture est introduite dans un récipient et est soumise à une décomposition microbienne avec amenée d'air, où le processus de pourrissage est accompli ou respectivement réglé de façon que soit produite une quantité aussi grosse que possible de CO₂ par unité de temps pour que soit produite une consommation maximale d'oxygène dans la matière en pourriture par unité de temps.

4. Procédé selon la revendication 3, caractérisé en ce que la consommation d'oxygène par unité de temps obtenue à partir de la teneur en oxygène dans l'air d'échappement, de la teneur en oxygène dans l'air amené et de la quantité d'air d'échappement ou respectivement de la quantité d'air amené par unité de temps.

5. Procédé pour le compostage des déchets dans lequel la matière en pourriture est introduite dans un récipient et est décomposée par voie microbienne avec amenée d'air, où le processus de pourrissage est accompli ou respectivement réglé de manière à produire une quantité aussi grosse que possible de CO₂ par unité de temps, la quantité d'air amené étant ajustée de façon à produire par unité de temps une perte maximale de poids de la matière en pourriture.

6. Procédé selon l'une des revendications précédentes, caractérisé en ce que la quantité d'air amené est augmentée par unité de temps lorsque la teneur en CO₂ dans l'air d'échappement dépasse une valeur limite supérieure.

7. Procédé selon l'une des revendications précédentes, caractérisé en ce que la quantité d'air amené par unité de temps est réglée de façon que la teneur en CO₂ soit aussi proche que possible d'une valeur limite supérieure.

8. Procédé selon l'une des revendications précédentes, caractérisé en ce que le procédé est terminé quand, malgré une régulation optimale, la quantité de CO₂ par unité de temps dans l'air d'échappement n'augmente plus ou ne diminue plus.

9. Procédé selon l'une des revendications précédentes, caractérisé en ce que la quantité d'air amené par unité de temps est ajustée de façon qu'une température prédéterminée dans la matière en pourriture, avantageusement de 50°C, ne soit pas dépassée.

10. Procédé selon l'une des revendications précédentes, caractérisé en ce que la quantité d'air amené est ajustée de manière qu'une teneur prédéterminée en oxygène, avantageusement de 17%, ne soit pas dépassée.
